# EUROPÄISCHE PATENTANMELDUNG

(11) **EP 2 423 083 A1**
(43) Veröffentlichungstag der Anmeldung: **29.02.2012**
(21) Anmeldenummer: 11405308.5
(22) Anmeldetag: 24.08.2011
(51) Int. Cl.: B62J 3/00

(54) **Fahrradklingel an einem Gabelschaftrohr für ein Fahrrad**

(30) Priorität: 26.08.2010 CH 13762010
(71) Anmelder: Flow AG, 2504 Biel (CH)
(72) Erfinder: Droux, Vincenz, 2502 Biel (CH); Droux, Robert, 3414 Oberburg (CH)
(74) Vertreter: AMMANN PATENTANWÄLTE AG BERN

(57) **Zusammenfassung**

Die Erfindung betrifft eine Fahrradklingel (1) zur Montage am Gabelschaftrohr (15) beispielsweise im Bereich der Distanzringe (3), welche rund um das Gabelschaftrohr (15) als Klangkörper (2) ausgebildet ist. Die Erfindung ist dadurch gekennzeichnet, dass der Klangkörper (2) so ausgebildet ist, dass er ein Durchgangsloch aufweist und auf das Gabelschaftrohr (15) aufgesteckt werden kann und zusätzlich die Funktion des Distanzrings (3) übernehmen kann oder mit einer Klemmvorrichtung (9) über einen zylindrischen Körper, beispielsweise über die Distanzringe (3), befestigt werden kann.

## Beschreibung

Die Erfindung bezieht sich auf eine Fahrradklingel an einem Gabelschaftrohr für ein Fahrrad. Im weiteren bezieht sie sich auf ein Verfahren zur Montage der Fahrradklingel.

Eine Fahrradklingel weist in der Regel einen Klangkörper auf, welcher zur Erzeugung eines Klingeltones dient. Er wird durch äusseren Einfluss, beispielsweise durch einen Amboss oder rotierende Klöppel, in Schwingung gebracht. Der Rotor mit Klöppel dient mittels mehrerer durch eine rotierende Bewegung erzeugter Schläge auf den Klangkörper zum Auslösen einer Schwingung bzw. zum Erzeugen des Klanges. Zweck ist die Emission eines akustischen Signals. Es gibt weiter auch elektronische Klingeln oder Hupen. Die Fahrradklingel wird in der Regel am Lenker mittels Rohrschellen befestigt. Diese Befestigung erfolgt mittels Schraube oder einem Schnappmechanismus. Es gibt weiter Befestigungssysteme zur stirnseitigen Befestigung am Lenkerende. Die Befestigung als zusätzliches Element am Lenker führt mehrere Nachteile mit sich. Beispielsweise werden am Lenker laufend mehr Einrichtungen befestigt. Neben Brems-, Schalt- und Lichtanlagen kommen Bedienungshebel für Federgabel, Dämpfer oder absenkbare Sattelstütze dazu. Dies führt zu einer Überladung des Lenkers mit Einrichtungen, was viele Radfahrer davon abhält, eine Klingel zu montieren. Die Klingel ist in keiner ästhetisch ansprechenden Weise in die bestehenden Fahrradeinrichtung integriert, was ein weiterer Grund ist, warum zahlreiche Radfahrer keine Fahrradklingel montieren, dadurch die Vorschriften verletzen und die Verkehrssicherheit beeinträchtigen. Die abstehende Fahrradklingel ist weiter anfällig auf Kratzer und Defekte beispielsweise bei Stürzen. Zudem ist sie auf einfache Weise vom Fahrrad demontierbar, was die Gefahr von Diebstahl der Fahrradklingel erhöht.

Ein Distanzring dient der Höheneinstellung des Lenkers und wird über das Gabelschaftrohr zwischen Vorbau und obere Lagereinheit des Steuersatzes geklemmt. Es können ein Ring oder mehrere Ringe eingebaut werden. Üblicherweise werden mehrere Distanzringe übereinander eingebaut, um in ihrer Summe die gewünschte Lenkerhöhe zu erzielen. Der Innendurchmesser orientiert sich am Durchmesser des Gabelschaftrohrs und verläuft in der Regel zylindrisch. Die Aussenkontur der Distanzringe ist oft zylindrisch, es gibt sie auch konisch oder konkav oder konvex gewölbt. Die Distanzringe gibt es in unterschiedlichen Höhen. Der Distanzring kann auch oberhalb des Vorbaus eingebaut werden. Dies wird dann gemacht, wenn das Gabelschaftrohr vor dem Zusammenbau in seiner Länge nicht auf das entsprechende Mass gekürzt werden soll, die Höhe des Lenkers jedoch eine tiefliegende Position haben soll. Dem Distanzring wird weiter keine Funktion zugeschrieben.

Einstellschraube mit Kralle und Abschlussdeckel sind bekannte Fahrradeinrichtungen zum Einstellen des Lagerspiels im Steuersatz. Diese Komponenten werden im Zusammenhang mit dem "Aheadset"-Vorbau genutzt. Die vorliegende Erfindung nutzt die in dem Zusammenhang erzeugte Klemmkraft zur Befestigung der Fahrradklingel.

Ein Vorbau ist Teil der bekannten Fahrradeinrichtung. In der Ausführung "Aheadset" wird er über das Gabelschaftrohr gesteckt und weist handelsüblich ein Klemmsystem auf, das diesen auf dem Gabelschaftrohr nach eingestelltem Lagerspiel fixieren lässt. Demgegenüber gibt es weiter die Verwendung des "klassischen Vorbaus", welcher in das Steuerschaftrohr gesteckt wird und mit einer Klemmvorrichtung im Steuerschaftrohr fixiert wird.

Eine Klingel, die mittels der Einstellschraube zentral oben auf der Abschlusskappe befestigt ist, ist aus der NL-C-1034366 bekannt.

Aufgabe der vorliegenden Erfindung ist es, eine Fahrradklingel zu schaffen, welche unter Nutzung bestehender
Fahrzeugkomponenten besser in die bestehende Einrichtung integriert montiert ist.

Eine solche Klingel ist in Anspruch 1 angegeben. Die weiteren Ansprüche geben bevorzugte Ausführungen und ein Verfahren zum Anbringen der Fahrradklingel an.

Als Fahrrad ist dabei neben einem eigentlichen Fahrrad auch ein Fahrzeug zu verstehen, das einen Lenker aufweist, der mittels eines Schafts in einem Lager drehbar gehalten ist.

Die Erfindung wird anhand von bevorzugten Ausführungsbeispielen unter Bezugnahme auf Figuren erläutert. Es zeigen:
- Fig. 1: eine Seitenansicht des vorderen Bereichs eines Fahrrads mit ausgebauten Komponenten im Bereich des Gabelschaftrohrs,
- Fig. 2: eine Explosionsansicht einer ersten ausgebauten Fahrradklingel,
- Fig. 3: einen Querschnitt durch die erste Fahrradklingel,

- Fig. 4: eine Explosionsansicht einer zweiten ausgebauten Fahrradklingel,
- Fig. 5: einen Querschnitt durch die zweite ausgebaute Fahrradklingel,
- Fig. 6: eine Ansicht einer dritten ausgebauten Fahrradklingel,
- Fig. 7: einen Querschnitt durch die dritte Fahrradklingel,
- Fig. 8: eine Explosionsansicht einer vierten ausgebauten Fahrradklingel,
- Fig. 9: einen Querschnitt durch die vierte ausgebaute Fahrradklingel,
- Fig. 10: eine Explosionsansicht einer fünften ausgebauten Fahrradklingel,
- Fig. 11: einen Querschnitt durch die fünfte ausgebaute Fahrradklingel,
- Fig. 12: eine Explosionsansicht einer sechsten ausgebauten Fahrradklingel,
- Fig. 13: einen Querschnitt durch die sechste ausgebaute Fahrradklingel.
- Fig. 14: eine Explosionsansicht einer siebten Fahrradklingel,
- Fig. 15: einen Schnitt durch die siebte Fahrradklingel,
- Fig. 16: eine räumliche Ansicht einer achten Fahrradklingel.

Die Klingel nutzt zur Montage bestehende Fahrradkomponenten wie das Steuerrohr des Fahrradrahmens mit darin eingebautem Steuersatz, den Vorbau, Distanzringe, Abschlusskappe, Gabelschaftrohr mit eingeschlagener Kralle und Einstellschraube zur Einstellung des Lagerspiels des Steuersatzes.

Allgemein wird somit erreicht, dass keine erheblichen ästhetischen Nachteile, erhebliche Diebstahlgefahr, oder die erhöhte Gefahr von Verkratzung und Defekten der Fahrradklingel, beispielsweise bei Stürzen, in Kauf genommen werden müssen. Die Erfindung betrifft eine Fahrradklingel zur Montage am Gabelschaftrohr beispielsweise im Bereich der Distanzringe, welche rund um die Achse des Gabelschaftrohrs als Klangkörper ausgebildet wird. Die Befestigung des Klangkörpers erfolgt beispielsweise analog der Distanzringe mittels Klemmkraft der Einstellschraube, die koaxial zum Gabelschaftrohr in Richtung Gabelkrone wirkt. Der Klangkörper kann direkt oder über ein Isolationselement oder über eine Klemmvorrichtung befestigt werden. Die Befestigung der Klingel mit einer Klemmvorrichtung über die Distanzringe ist ein weiteres Ausführungsbeispiel dieser Erfindung. Ein akustisches Signal kann über einen Amboss oder einen Rotor bzw. Klöppel ausgelöst werden.

Der Klangkörper besteht beispielsweise aus einer runden Glocke bzw. einem Rotationskörper mit einem axialen Durchgangsloch. Der Durchmesser des Durchgangslochs weist beispielsweise mindestens die Grösse des zur Verwendung kommenden Gabelschaftrohrs auf, so dass der Klangkörper mittels Durchgangsloch über das Gabelschaftrohr gesteckt und positioniert werden kann. Der Klangkörper liegt koaxial zum Gabelschaftrohr, so dass er dieses als Rotationskörper umfasst. Die Glockenseitenwand verläuft beispielsweise a) zylindrisch, b) konisch, c) konkav oder konvex gewölbt oder weist d) eine beliebige andere 2D-Kontur auf. Es sind auch
Ausführungsbeispiele möglich, die nicht koaxial verlaufen und bei welchen die Achsen in Lage und/oder Winkel versetzt zueinander liegen. Der Klangkörper ist nicht zwingend als Rotationskörper aufgebaut und kann beispielsweise auch eine ovale, eiförmige, tropfenförmige, mehreckige oder aus Kreissegmenten, Splines und/oder geraden Linien frei zusammengesetzte Form aufweisen.

Der Klangkörper kann an bestimmten Stellen Einbuchtungen beispielsweise zur Klangerzeugung aufweisen, die beispielsweise als definierte Kontaktflächen zwischen Amboss oder Klöppel und Klangkörper ausgebildet sind.

Der Klangkörper kann eine geschlossene Oberfläche aufweisen. Zur Beeinflussung des Klangbildes kann die Oberfläche Löcher, Segmentierungen und Schlitze aufweisen wie beispielsweise a) kreisförmige Schlitzsegmente oder ein Lochbild um die Durchgangsöffnung, b) radial angeordnete Schlitzsegmente, c) eine Unterteilung in mehrere Segmente beim Durchgangsloch. Die Segmentierung kann so ausgeführt sein, dass das Durchgangsloch mit Verbindungsstegen ausgebildet ist, welche die Verbindung zu den anderen Komponenten wie beispielsweise dem Distanzring herstellen. Das Durchgangsloch kann neben einer kreisrunden Kontur auch a) wellenförmig, b) gezackt, c) gezahnt, d) oval oder e) eckig ausgeführt sein, ohne dass der Bereich die Funktion als Distanzring verliert.

Die Fahrradklingel kann beispielsweise auch eine Klemmvorrichtung aufweisen, die ein Festklemmen ringförmig beispielsweise an die Distanzringe oder an einen klassischen Vorbau ermöglicht. Der Klangkörper kann dazu eine Klemmvorrichtung aufweisen, welche beispielsweise durch ganze oder teilweise Segmentierung vertikale Laschen aufweist, die eine Klemmwirkung in Richtung Hauptachse des Steuerschaftrohrs erzeugt. Die Klemmkraft dieser Klemmvorrichtung kann beispielsweise auch über eine Schraube analog einer Rohrschelle oder über eine koaxial zum Gabelschaftrohr angeordnete Mutter oder über ein anderes federndes Element aufgebracht sein. Um eine definierte Klemmkraft zu erreichen, ist die Verwendung von im Aussendurchmesser definierten Distanzringen vorteilhaft. Die Ausführungsbeispiele der Erfindung zeigen Montagevarianten im bevorzugten Bereich des Gabelschaftrohrs. Der Klangkörper und die Klemmvorrichtung können einteilig ausgebildet sein oder zusammengesteckt oder mittels Kleb-, Schweiss-, Löt-, Schraub-, Niet-, Schnapp-, Press- oder anderweitiger Verbindungen miteinander verbunden sein. Der Klangkörper wird bevorzugt in Metall, beispielsweise Aluminium, Eisen oder Stahl ausgebildet. Die Klemmvorrichtung kann neben Metall bevorzugt beispielsweise auch in Kunststoff oder Gummi ausgebildet sein.

Ein Isolationselement dient zur verbesserten Schwingung des Klangkörpers. Das Isolationselement, beispielsweise aus Kunststoff, Gummi, Metall oder einem Material, das eine verbesserte Schwingung des Klangkörpers ermöglicht, kann im Bereich zwischen Distanzring und Klangkörper oder Gabelschaftrohr und Klangkörper nach Bedarf ringförmig oder segment- oder punktweise angebracht sein. Das Isolationselement kann oberhalb und/oder unterhalb des Klangkörpers positioniert sein oder dessen Innenkante ähnlich beispielsweise einem Kantenschutzprofil umschliessen.

Die vorliegende Erfindung nutzt Lage und Einbauprinzip des Distanzrings und schreibt diesem neue Funktionen zu. Sie sieht für den Distanzring beispielsweise die Zusatzfunktion zur definierten Aufnahme des Klangkörpers vor. Vorbau und Lagereinheit des Steuersatzes weisen aufgrund ihrer hohen Belastung oft grössere Wandstärken und Volumen auf. Der Distanzring schafft eine Distanz bzw. einen definierten Einbauraum für den Klangkörper, um die Klangwirkung nicht zu stören, indem der Vorbau oder Teile der Lagereinheit oder des Fahrradrahmens klangrelevante Teile des Klangkörpers berühren. Der Distanzring dient zur Übertragung der Klemmkraft der Einstellschraube mittels einer definierten Kontaktfläche zum Klangkörper. Diese Kontaktfläche kann beispielsweise auf eine möglichst kleine Fläche reduziert werden, beispielsweise indem der Aussendurchmesser des Distanzrings ein minimales Mass aufweist oder indem die dem Klangkörper zugewandte Stirnseite des Distanzrings segmentiert ist oder eine Zahnung oder Zacken aufweist. Der Distanzring kann auf der dem Klangkörper zugewandten Seite beispielsweise auch eine Abstufung (Verjüngung), eine Fase oder eine Nut aufweisen, die für die Verbindung zum Klangkörper ausgeführt ist oder eine direkte Kraftübertragung auf den nächsten Distanzring ermöglicht, so dass auf den Klangkörper keine direkte Klemmkraft wirkt und dieser sich in einem definierten Bereich leicht bewegen kann. Dies kann auch über im Distanzring angebrachte Nuten und entsprechende Sicherungsringe oder andere Sicherungselemente erfolgen, welche zur Fixierung des Klangkörpers auf dem Distanzring ausgebildet sind. Distanzringe sind in der Regel aus Metall oder Karbon (karbonfaserverstärkter Kunststoff). Der Distanzring kann beispielsweise auch aus Kunststoff oder Verbundwerkstoffen ausgebildet sein. Der Distanzring (bei mehreren Distanzringen einer der Distanzringe) und der Klangkörper können einteilig ausgebildet sein oder zusammengesteckt oder mittels Kleb-, Schweiss-, Löt-, Schraub-, Niet-, Schnapp-, Press- oder anderweitiger Verbindung miteinander verbunden sein.

Ein Amboss mit Federelement dient mittels eines mit Federkraft erzeugten Schlages zum Auslösen einer Schwingung im Klangkörper bzw. zum Erzeugen des Klanges. Der Amboss kann weiter aus mehreren Einzelteilen aufgebaut sein, bestehend aus Ambosskörper, Ambossfeder und Ambossfederhalterung. Die Elemente des Ambosses können auch einteilig ausgebildet sein, beispielsweise als Spritzgussteil aus Kunststoff oder als Blechteil aus Federstahl. Im Aufbau von Amboss mit Feder sind weiter alle im Stand der Technik bekannten Aufbauarten möglich. Der Amboss mit Federelement kann beispielsweise direkt am Klangkörper oder am Distanzring angebracht sein oder einteilig mit einem davon ausgebildet sein, unabhängig davon, ob diese untereinander jeweils wiederum einteilig ausgebildet sind oder als separate Einzelteile aufgebaut sind. Die Verbindung kann durch eine Kleb-, Schweiss-, Löt-, Schraub-, Niet-, Schnapp-, Press- oder anderweitige Verbindung realisiert sein.

Ein Rotor mit Klöppel kann an der Fahrradklingel beispielsweise anstelle des Ambosses zum Auslösen des akustischen Signals vorgesehen sein. Dieser kann in vorteilhafter Weise koaxial zum Steuerschaftrohr angeordnet sein. Die am Rotor integrierten Klöppel erzeugen beim Drehen des Rotors durch Aufschlagen am Klangkörper den Klingelton. Eine Feder kann zwischen Rotor und Distanzring oder Klangkörper oder anderen am Steuerschaftrohr fest fixierten Elementen oder am Steuerschaftrohr selbst angebracht sein und gegen die Drehbewegung wirken, wobei beispielsweise nach erfolgter Drehung des Rotors mittels Handkraft um beispielsweise eine halbe Umdrehung dieser durch die Federkraft wieder in die Ausgangsposition zurückgedreht wird. Diese Handbewegung kann beispielsweise über ein aussen liegendes Rändelrad erfolgen oder über einen Hebel oder einen Griffbereich. Die Fahrradklingel mit Rotor kann mit oder ohne Rotorfeder umgesetzt sein. Der Rotor wird beispielsweise mittels eines Sicherungsrings und einer dafür vorgesehenen Nut koaxial am Distanzring angebracht. Eine Führung des Rotors kann auch direkt über das Steuerschaftrohr erfolgen. Anstelle des Sicherungsrings sind weitere Fixiersysteme möglich, wie beispielsweise eine Mutter, ein Distanzring als Gegenstück, ein Klemmstück oder eine andere Einrichtung, die eine Positionierung des Rotors mit der Möglichkeit der Drehbewegung des Rotors erschafft. Die Erfindung kann auch auf Basis eines rotierenden Klangkörpers und stehender Klöppel umgesetzt werden.

Der Vorbau kann beispielsweise so eingerichtet sein, dass er eine definierte Kontaktfläche zum Klangkörper gewährleistet, womit ein Dämpfen von klangrelevanten Bereichen des Klangkörpers verhindert und die Klangqualität nicht beeinträchtigt wird. Dies erübrigt die Verwendung eines Distanzrings in diesem Bereich.

Ein Gabelschaftrohr ist Teil der bekannten Fahrradeinrichtung. Es hat neu die Zusatzfunktion zur Aufnahme der Fahrradklingel bzw. des Klangkörpers, indem dieser mittels Durchgangsöffnung über das Rohr geführt und beispielsweise analog einem Distanzring befestigt wird.

Die Anordnung der Fahrradklingel im Bereich des Gabelschaftrohrs bedeutet, dass diese gut integrierter Bestandteil des Fahrrads ist und nicht wie bei konventionellen Lösungen ein aufgesetztes Gerät am Lenker darstellt. Sie schafft Platz für andere Einrichtungen am Lenker oder sorgt beispielsweise am Lenker für eine aufgeräumte Optik. Sie ist besser gegen Kratzer und Defekte geschützt. Das Verletzungsrisiko beispielsweise bei einem Sturz ist kleiner. Eine Demontage der Klingel ist nur durch Fachleute bzw. mit besonderem Aufwand möglich, was den Diebstahl erschwert.

Die Fahrradklingel am Gabelschaftrohr, befestigt bei den Distanzringen, ist eine konstruktiv einfache Lösung mit minimalem Gewicht. Es wird keine zusätzliche Schelle zur Befestigung benötigt.

Die Fahrradklingel am oder auf dem Gabelschaftrohr ist auf einfache Art wirtschaftlich umsetzbar.

Die Anordnung des Klangkörpers als "Klanghaube" parallel zur Achse des Gabelschaftrohrs ist unauffällig und erfüllt deshalb hohe ästhetische Ansprüche. Dies führt zu einer grösseren Akzeptanz der Fahrradklingel bei den Fahrradfahrern, insbesondere bei Sportlern, und erhöht damit die Verkehrssicherheit, da mehr Fahrradfahrer bereit sind, an ihrem Fahrrad eine Fahrradklingel zu montieren.

Die Fahrradklingel kann als Übergangsstück zwischen Rahmen und Gabel gestaltet werden und schützt je nach Ausführungsart die obere Lagereinheit des Steuersatzes zusätzlich vor Witterungseinflüssen.

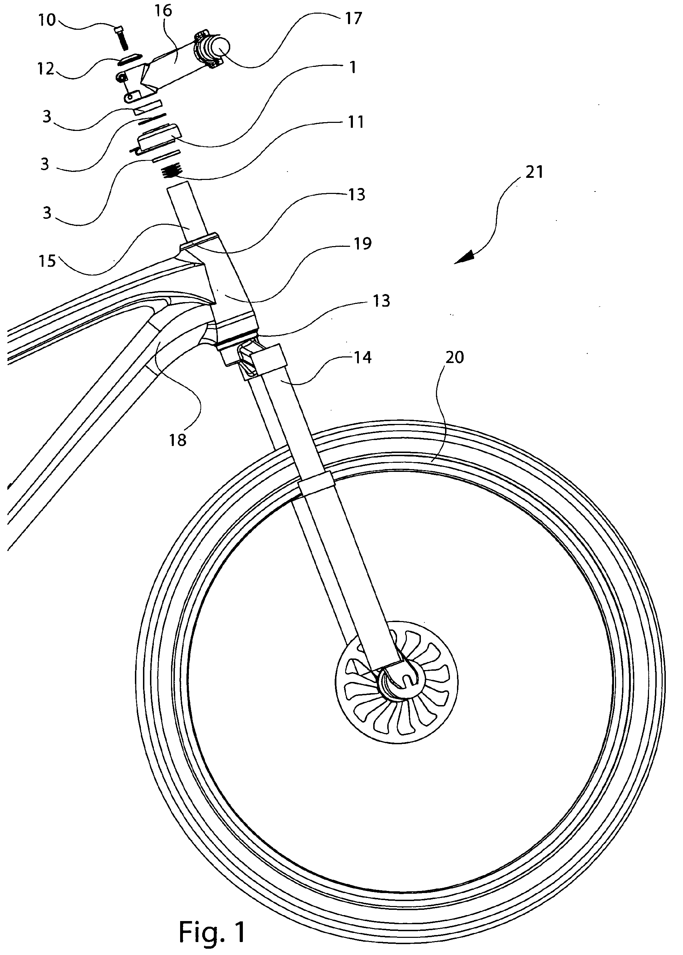

Fig. 1 zeigt schematisch den vorderen Teil eines Fahrrads 21 als Explosionsansicht mit einem Rahmen 18, einer Gabel 14, einem Vorderrad 20, einem Vorbau 16, einem Steuersatz 13, einer Kralle 11, einem Abschlussdeckel 12, einer Einstellschraube 10 und Distanzringen 3. Der Aufbau eines solchen Fahrrads ist im Stand der Technik bekannt. Bei den Bauteilen kann es sich um handelsübliche Komponenten handeln. Eine Fahrradklingel 1 ist eingerichtet, um diese über das Steuerschaftrohr 15 zu führen, so dass diese ringförmig um das Steuerschaftrohr 15 angeordnet ist und in eingebautem Zustand koaxial zum Steuerschaftrohr 15 positioniert ist.

Der Einbau erfolgt analog den Distanzringen 3. Mit der Einstellschraube 10 wird über die im Steuerschaftrohr 15 eingebaute Kralle 11 das Lagerspiel eingestellt. Diese Klemmkraft wird als zusätzliche Funktion für die Fixierung der Fahrradklingel 1 genutzt. Nach erfolgter Einstellung des Lagerspiels wird der Vorbau 16 auf dem Gabelschaftrohr 15 festgeklemmt. Die Fahrradklingel 1 ist damit fest positioniert.

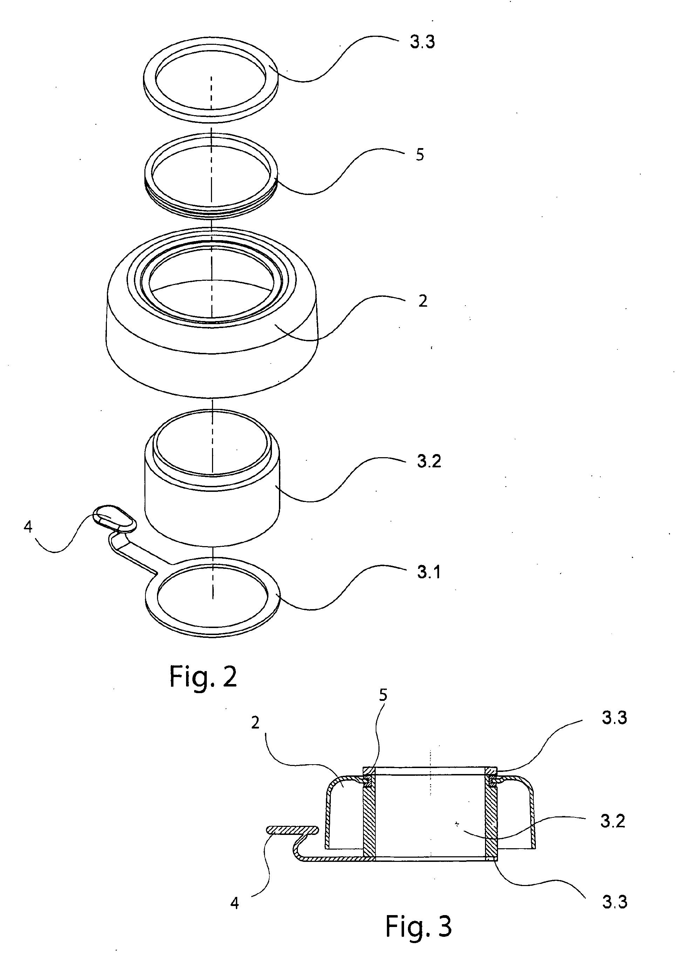

Fig. 2 zeigt schematisch eine Explosionsansicht einer Fahrradklingel 1 bestehend aus Klangkörper 2, drei Distanzringen 3, Amboss 4 und Isolationselement 5. Der Amboss 4 ist mit dem unteren Distanzring 3.1 einteilig aufgebaut. Der mittlere Distanzring 3.2 weist auf der dem Klangkörper 2 zugewandten Seite einen Absatz auf, auf welchem der Klangkörper 2 mit dem Isolationselement 5 positioniert wird. Der obere Distanzring 3.3 wird entsprechend den anderen Komponenten koaxial positioniert, so dass er die von oben wirkende Klemmkraft auf den mittleren Distanzring 3.2 weiterleiten kann und die Fahrradklingel 1 am hier nicht gezeigten Gabelschaftrohr 15 fixiert wird. Die Distanzringe 3 sind so ausgeführt, dass sie keine klangrelevanten Bereiche des Klangkörpers 2 berühren oder dämpfen.

Fig. 3 zeigt schematisch eine Schnittansicht des in Fig. 2 beschriebenen Ausführungsbeispiels. Die Komponenten befinden sich in ihrer Lage entsprechend dem montierten Zustand am Fahrrad.

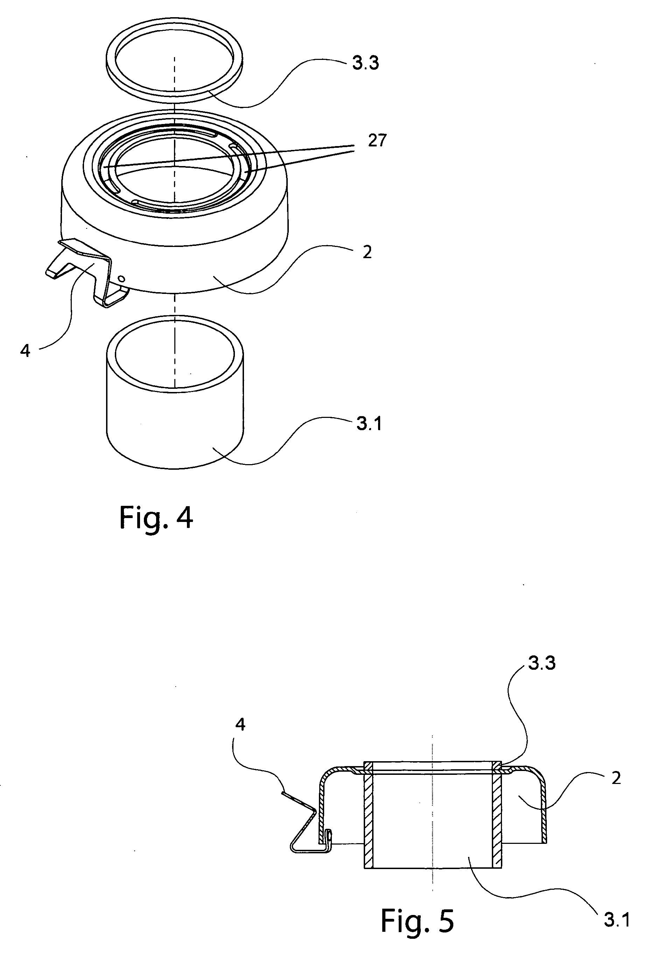

Fig. 4 zeigt schematisch eine Explosionsansicht einer zweiten Fahrradklingel 1 bestehend aus Klangkörper 2, zwei Distanzringen 3 und Amboss 4. Der Amboss 4 ist mit dem Klangkörper 2 verbunden. Der Klangkörper 2 weist an der oberen Seite radial angeordnete Langlöcher 27 auf, die zur verbesserten Schwingung des Klangkörpers 2 beitragen. Die Distanzringe 3 werden je unter- und oberhalb des Klangkörpers 2 positioniert. Mit der von oben wirkenden Klemmkraft wird der Klangkörper 2 über die Distanzringe 3 festgeklemmt und am hier nicht gezeigten Gabelschaftrohr 15 fixiert. Die Distanzringe 3 sind so ausgeführt, dass sie keine klangrelevanten Bereiche des Klangkörpers 2 berühren oder dämpfen.

Fig. 5 zeigt schematisch eine Schnittansicht des in Fig. 4 beschriebenen Ausführungsbeispiels. Die Komponenten befinden sich in ihrer Lage entsprechend dem montierten Zustand am Fahrrad.

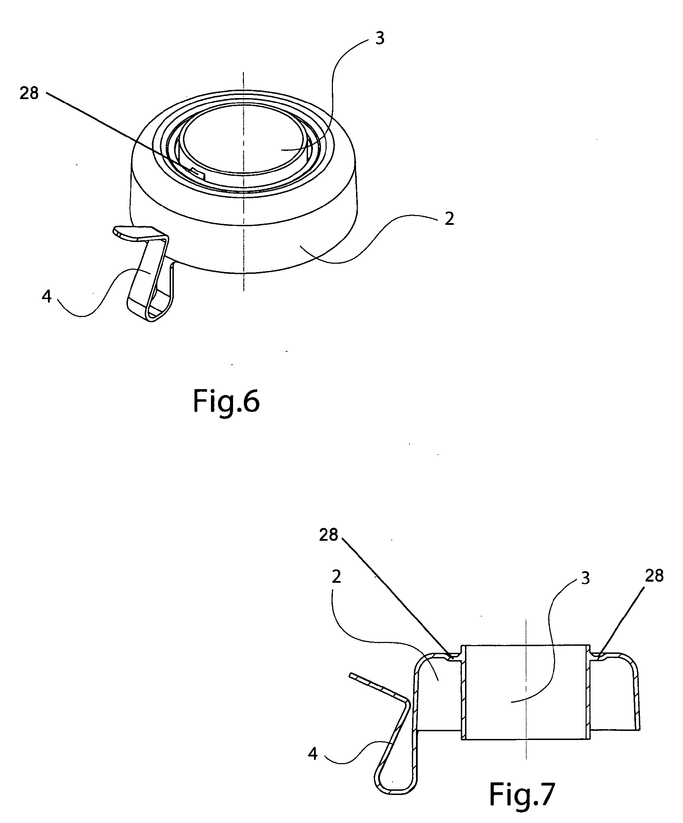

Fig. 6 zeigt schematisch eine Ansicht einer dritten Fahrradklingel 1 bestehend aus Klangkörper 2, Distanzring 3 und Amboss 4. Der Amboss 4 ist mit dem Klangkörper 2 einteilig ausgebildet. Der Klangkörper 2 ist mit dem Distanzring 3 über Stege 28 mittels Schweissen verbunden. Der Distanzring 3 ist zum Klangkörper 2 so positioniert, dass für den Klangkörper 2 gegen oben wie auch gegen unten ausreichend Einbauraum am Steuerschaftrohr geschaffen ist. Mit der von oben wirkenden Klemmkraft wird der Distanzring 3 und damit auch der Klangkörper 2 am hier nicht gezeigten Gabelschaftrohr 15 fixiert. Im Zusammenhang mit weiteren Distanzringen 3 kann der in diesem Ausführungsbeispiel gezeigte Distanzring 3 beispielsweise auch kürzer sein.

Fig. 7 zeigt schematisch eine Schnittansicht des in Fig. 6 beschriebenen Ausführungsbeispiels.

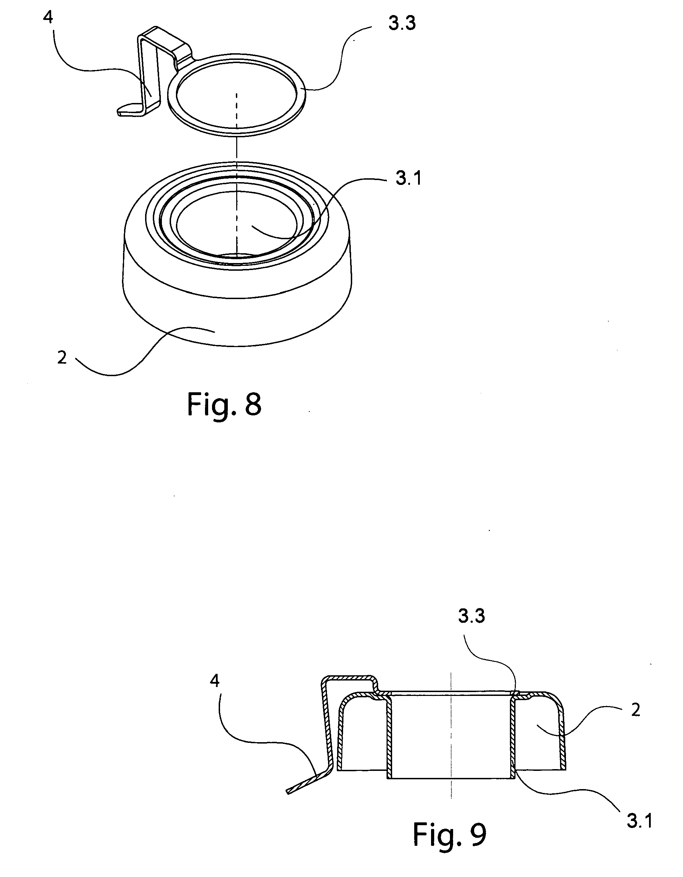

Fig. 8 zeigt schematisch eine Explosionsansicht einer vierten Fahrradklingel 1 bestehend aus Klangkörper 2, zwei Distanzringen 3 und Amboss 4. Der Amboss 4 ist mit dem oberen Distanzring 3.3 einteilig ausgeführt. Der Klangkörper 2 ist mit dem unteren Distanzring 3.1 einteilig ausgeführt. Die Distanzringe 3 werden koaxial positioniert und mit der von oben wirkenden Klemmkraft am hier nicht gezeigten Gabelschaftrohr 15 fixiert.

Fig. 9 zeigt schematisch eine Schnittansicht des in Fig. 8 beschriebenen Ausführungsbeispiels. Die Komponenten befinden sich in ihrer Lage entsprechend dem montierten Zustand am Fahrrad.

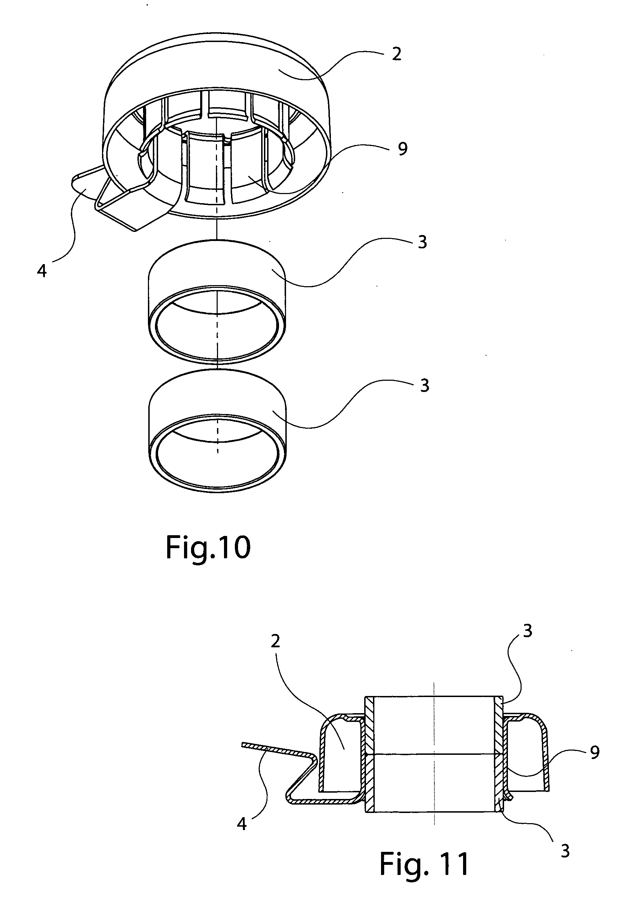

Fig. 10 zeigt schematisch eine Explosionsansicht einer fünften Fahrradklingel 1 bestehend aus Klangkörper 2, zwei Distanzringen 3, Klemmvorrichtung 9 und Amboss 4. Der Klangkörper 2 ist mit der Klemmvorrichtung 9 und mit dem Amboss 4 einteilig aufgebaut. Der Klangkörper 2 wird über die Distanzringe 3 positioniert und mittels der Klemmvorrichtung 9 fixiert. Mit der von oben wirkenden Klemmkraft werden die Distanzringe am hier nicht gezeigten Gabelschaftrohr 15 fixiert.

Fig. 11 zeigt schematisch eine Schnittansicht des in Fig. 10 beschriebenen Ausführungsbeispiels. Die Komponenten befinden sich in ihrer Lage entsprechend dem montierten Zustand am Fahrrad.

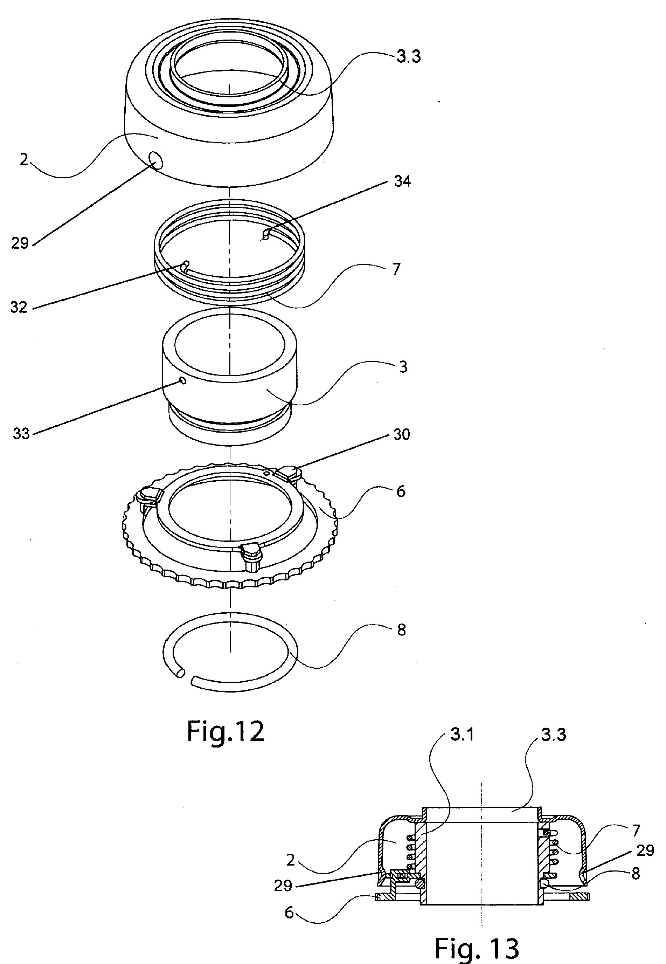

Fig. 12 zeigt schematisch eine Explosionsansicht einer sechsten Fahrradklingel 1 bestehend aus einem Klangkörper 2, zwei Distanzringen 3, einem Rotor 6 mit Klöppel 30, einer Rotorfeder 7 und einem Sicherungsring 8. Der Klangkörper 2 weist Einbuchtungen 29 als definierte Kontaktstellen zu den Klöppeln 30 auf und ist mit dem oberen Distanzring 3.3 einteilig ausgeführt. Der untere Distanzring 3.1 weist einen Bereich zur Aufnahme des Rotors 6 mit Klöppel 30 auf. Mit dem Sicherungsring 8 wird der Rotor 6 auf dem unteren Distanzring 3.1 montiert, so dass dieser sich um die gemeinsame Achse frei drehen kann. Eine Rotorfeder 7 ist über dem unteren Distanzring 3.1 positioniert und mit dem oberen abgebogenen Federende 32 über ein Loch 33 mit diesem verbunden. Mit dem unteren abgebogenen Federende 34 ist die Rotorfeder 7 mit dem Rotor 6 mit Klöppel 30 verbunden. Die Rotorfeder 7 verbindet damit fix montierte Elemente mit dem Rotor 6, so dass die freie Bewegung des Rotors 6 mittels Federkraft eingeschränkt wird. Die Komponenten werden koaxial positioniert und mit der von oben wirkenden Klemmkraft über die Distanzringe 3 am hier nicht gezeigten Gabelschaftrohr 15 fixiert.

Fig. 13 zeigt schematisch eine Schnittansicht des in Fig. 12 beschriebenen Ausführungsbeispiels. Die Komponenten sind in ihrer Lage entsprechend dem montierten Zustand am Fahrrad dargestellt.

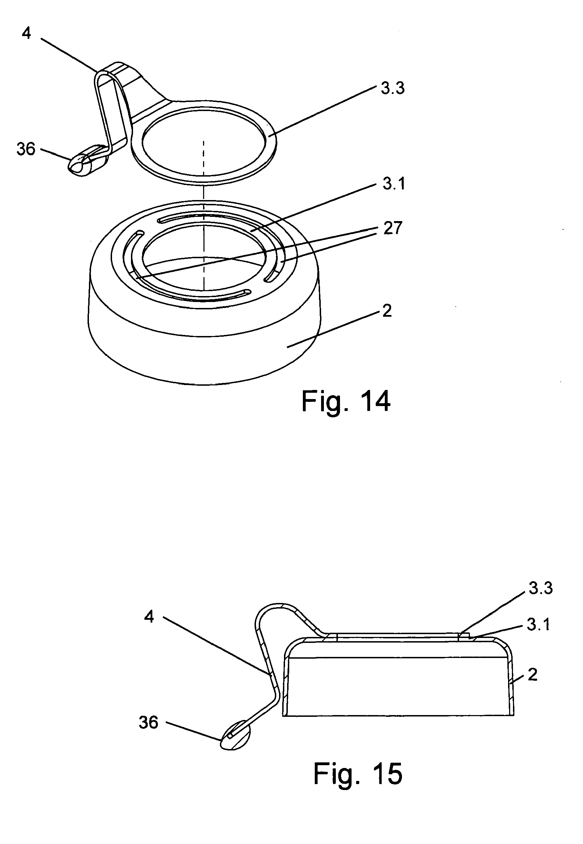

Fig. 14 zeigt eine siebte Fahrradklingel 1. Sie entspricht der vierten Fahrradklingel gemäss Figg. 8 und 9 mit folgenden Abwandlungen:
- Das Ende des Ambosses 4 ist mit einer Griffperle 36 versehen, um das Betätigen angenehmer zu gestalten.
- Der Klangkörper 2 weist Langlöcher 27 analog der zweiten Ausführung auf.
- Der untere Distanzring 3.1 ist auf die Materialstärke des
   Klangkörpers 2 reduziert und einteilig mit ihm ausgeführt.

Fig. 15 zeigt einen Schnitt durch diese Ausführung.

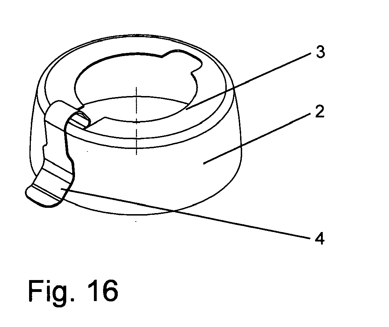

Fig. 16 zeigt eine achte Fahrradklingel 1. Hier ist der Amboss 4 aus dem Klangkörper 2 beispielsweise ausgestanzt und nach aussen in die gezeigte Form gebogen. Klangkörper 2, Amboss 4 und Distanzring 3 bilden hier eine integrale Einheit, die einfach zu montieren ist.

Aus der Darstellung der beispielhaften Fahrradklingeln ist offensichtlich, dass ihre Konstruktionsmerkmale in weitem Umfang frei kombinierbar sind.

Die Fahrradklingeln werden montiert, indem zunächst die unterhalb der Klingel liegenden Teile, z.B. Distanzringe 3, auf das Gabelschaftrohr 15 gesteckt werden. Es folgen die Klingelteile, insbesondere wie oben angegeben, und oberhalb der Klingel 1 angeordnete Teile wie weitere Distanzringe 3. Schliesslich werden der Vorbau 16 und der Abschlussdeckel 12 aufgesetzt. Nach Eindrehen der Einstellschraube 10 und Anziehen ist die Lenkergruppe mit Klingel 1 montiert.

Diese Montage erlaubt somit wesentlich einfacher und integral mit dem Zusammenbau der Lenkergruppe die Anbringung einer Fahrradklingel 1 an einem Fahrrad 21.

Zusammenfassend ist festzustellen, dass eine Fahrradklingel zur Montage an einem Fahrrad geschaffen wird, welche neue Möglichkeiten für deren Integration in die Bestehende Fahrradeinrichtung, neue Möglichkeiten für das Design und neue Möglichkeiten für die Montage schafft und Risiken von Diebstahl, Defekt oder Verletzung minimiert.

### Bezugszeichenliste

| | |
|---|---|
| 1 | Fahrradklingel |
| 2 | Klangkörper |
| 3 | Distanzring: 3.1: unterer, 3.2: mittlerer, 3.3: oberer |
| 4 | Amboss mit Federelement |
| 5 | Isolationselement |
| 6 | Rotor mit Klöppel |
| 7 | Rotorfeder |
| 8 | Spannring |
| 9 | Klemmvorrichtung |
| 10 | Einstellschraube |
| 11 | Kralle |
| 12 | Abschlussdeckel |
| 13 | Steuersatz |
| 14 | Gabel |
| 15 | Gabelschaftrohr |
| 16 | Vorbau |
| 17 | Lenker |
| 18 | Fahrradrahmen |
| 19 | Steuerrohr des Fahrradrahmens |
| 20 | Vorderrad |
| 21 | Fahrrad |
| 27 | Langloch |
| 28 | Steg |
| 29 | Einbuchtung |
| 30 | Klöppel |
| 32 | oberes abgebogenes Federende |
| 33 | Loch im Klangkörper |
| 34 | unteres abgebogenes Federende |
| 36 | Griffperle |

## Patentansprüche

1. Fahrradklingel (1) an einem Gabelschaftrohr (15) für ein Fahrrad (21) mit einem Klangkörper (2), wobei der Klangkörper (2) ein Durchgangsloch aufweist, welches zur Befestigung am Fahrrad (21) ausgebildet ist, **dadurch gekennzeichnet, dass** in montiertem Zustand das Durchgangsloch des Klangkörpers (2) koaxial um das Gabelschaftrohr (15) angeordnet ist.

2. Fahrradklingel (1) nach Anspruch 1, **dadurch gekennzeichnet, dass** der Klangkörper (2) ringförmig um das Gabelschaftrohr (15) am Fahrrad (21) befestigt ist.

3. Fahrradklingel (1) nach einem der Ansprüche 1 bis 2, **dadurch gekennzeichnet, dass** der Klangkörper (2) direkt oder über einen oder mehrere Distanzringe (3), über eine Klemmvorrichtung (9) und/oder über ein oder mehrere Isolationselemente (5) am Gabelschaftrohr (15) befestigt ist.

4. Fahrradklingel (1) nach einem der Ansprüche 1 bis 3, **dadurch gekennzeichnet, dass** zur Befestigung der Fahrradklingel (1) am Fahrrad die Wirkungsweise der Einstellschraube (10) genutzt wird.

5. Fahrradklingel (1) nach einem der Ansprüche 1 bis 4, **dadurch gekennzeichnet, dass** das Durchgangsloch im Klangkörper (2) höchstens 10 % grösser, gleich oder bis 10% kleiner als der Durchmesser des Gabelschaftrohrs (15) ist.

6. Fahrradklingel (1) nach einem der Ansprüche 1 bis 5, **dadurch gekennzeichnet, dass** ein Distanzring (3) zur Aufnahme des Klangkörpers (2) so ausgebildet ist, dass er auf der dem Klangkörper (2) zugewandten Stirnseite eine Abstufung aufweist, auf welcher der Klangkörper (2) positioniert ist und welche bewirkt, dass die Klemmkraft direkt auf das nächstliegende Bauteil geführt wird, so dass auf den Klangkörper (2) keine direkte Klemmkraft wirkt.

7. Fahrradklingel (1) nach einem der Ansprüche 1 bis 6, **dadurch gekennzeichnet, dass** der Klangkörper (2) und ein Distanzring (3) a) einteilig ausgebildet, b) zusammengesteckt oder mittels c) Kleb-, d) Schweiss-, e) Löt-, f) Schraub-, g) Niet-, h) Schnapp- oder i) Pressverbindung miteinander verbunden sind.

8. Fahrradklingel (1) nach einem der Ansprüche 1 bis 7, **dadurch gekennzeichnet, dass** der Amboss mit Federelement (4) und ein Distanzring (3) a) einteilig ausgebildet, b) zusammengesteckt oder mittels c) Kleb-, d) Schweiss-, e) Löt-, f) Schraub-, g) Niet-, h) Schnapp- oder i) Pressverbindung miteinander verbunden sind.

9. Fahrradklingel (1) nach einem der Ansprüche 1 bis 8, **dadurch gekennzeichnet, dass** der Klangkörper (2) Löcher oder Schlitzsegmente oder Einbuchtungen oder Abstufungen aufweist, die eine Schwingung der klangrelevanten Bereiche des Klangkörpers begünstigen.

10. Fahrradklingel (1) nach einem der Ansprüche 1 bis 9, **dadurch gekennzeichnet, dass** der Klangkörper (2) im Bereich des Durchgangslochs mit einer Klemmvorrichtung (9) zur Befestigung an einem zylindrischen Körper ausgerüstet ist.

11. Fahrradklingel (1) nach Anspruch 10, **dadurch gekennzeichnet, dass** die Klemmvorrichtung (9) eine Klemmkraft radial in Richtung auf die Achse des Gabelschaftrohrs (15) bewirkt.

12. Fahrradklingel (1) nach einem der Ansprüche 1 bis 11, **dadurch gekennzeichnet, dass** ein Rotor (6) mit Klöppel (30) ringförmig um das Gabelschaftrohr (15) und koaxial zum Gabelschaftrohr (15) angeordnet ist und sich um die Achse des Gabelschaftrohrs (15) drehen lässt.

13. Fahrradklingel (1) nach einem der Ansprüche 1 bis 12, **dadurch gekennzeichnet, dass** eine Rotorfeder (7) ringförmig um das Gabelschaftrohr (15) angeordnet ist und die drehenden Elemente und die in Bezug auf das Gabelschaftrohr (15) fixen Elemente verbindet, so dass die Rotorfeder (7) eine um die Achse des Gabelschaftrohrs (15) rotierende Bewegung aufnehmen kann.

14. Fahrradklingel (1) ausgelegt zur Verwendung als die Fahrradklingel am Gabelschaftrohr (15) gemäss einem der Ansprüche 1 bis 13.

15. Verfahren zur Montage einer Fahrradklingel (1) gemäss Anspruch 14, **dadurch gekennzeichnet, dass** die Fahrradklingel (1) unter der Wirkung der Einstellschraube (10) oder der Klemmvorrichtung (9) koaxial am Gabelschaftrohr (15) an das Fahrrad (21) montiert wird.
